# EUROPÄISCHE PATENTSCHRIFT

(11) **EP 2 697 084 B1**
(45) Veröffentlichungstag und Bekanntmachung des Hinweises auf die Patenterteilung: **14.06.2017**
(21) Anmeldenummer: 12701522.0
(22) Anmeldetag: 30.01.2012
(51) Int. Cl.: B60G 15/06, F16F 1/12, B60G 11/14

(54) **LAGERANORDNUNG FÜR EINE FEDER EINES FAHRZEUGFAHRWERKES**
BEARING ARRANGEMENT FOR A SPRING OF A VEHICLE CHASSIS
SYSTÈME DE PALIER POUR UN RESSORT DU TRAIN DE ROULEMENT D'UN VÉHICULE

(30) Priorität: 14.04.2011 DE 102011002065
(43) Veröffentlichungstag der Anmeldung: 19.02.2014
(73) Patentinhaber: Thyssenkrupp Federn und Stabilisatoren GmbH, 58119 Hagen (DE)
(72) Erfinder: SCHÜSSLER, Daniel, 78399 San Luis Potosi (MX); LECHNER, Dieter, 40470 Düsseldorf (DE)
(74) Vertreter: thyssenkrupp Intellectual Property GmbH
(86) Internationale Anmeldenummer: PCT/EP2012/051459
(87) Internationale Veröffentlichungsnummer: WO 2012/139782

(56) Entgegenhaltungen:
- EP-A1- 0 791 491
- DE-A1-102007 003 782
- US-A- 3 141 660
- US-B2- 7 213 802

## Beschreibung

Die vorliegende Erfindung betrifft eine Lageranordnung für eine Feder, insbesondere für eine Feder eines Fahrzeugfahrwerkes, mit zumindest einer Federbeilage, in der wenigstens ein Teil einer Federwindung der Feder aufgenommen ist.

Zur Aufnahme einer Feder insbesondere in einem Fahrzeugfahrwerk dienen meist Federteller, und die Feder ist mit zumindest einem Teil einer endseitigen Federwindung im Federteller abgestützt. Um zu vermeiden, dass die aus einem Metall ausgebildete Feder in direktem Kontakt zu einem metallischen Federteller betrieben wird oder zur erforderlichen Abstützung einen metallischen Kontakt aufweist, sind Federbeilagen bekannt, die sowohl am ersten als auch am zweiten Ende der Feder die endseitige Federwindung aufnehmen können. Mit einer am unteren Ende der Feder angeordneten Federbeilage kann diese im Federteller abgestützt werden. Als Werkstoff für die Bildung von Federbeilagen eignen sich Elastomere, sodass das Federende in einem weichen, nachgiebigen Werkstoff gelagert ist.

Im Betrieb der Feder führt diese sowohl relativ zum Federteller, jedoch auch relativ zur Federbeilage eine Bewegung aus, die sich insbesondere durch eine Wälzbewegung der Federwindung ergibt, die in der Federbeilage aufgenommen ist.

Durch die so entstehende Abwälzbewegung des Federendes kann zwischen der Federbeilage und der abwälzenden Federwindung ein sich öffnender und schließender Spalt entstehen. Durch die starke Einwirkung von Schmutz und Feuchtigkeit kann trotz der elastisch und nachgiebig ausgebildeten Federbeilage ein Schmiergel- und Schleifeffekt auf der Oberfläche der Federwindung entstehen, wodurch eine auf die Feder aufgebrachte Lackbeschichtung beschädigt werden kann.

### STAND DER TECHNIK

Aus der DE 10 2008 046 939 A1 ist eine Lageranordnung für eine Feder eines Fahrzeugfahrwerkes bekannt. Dabei wird vorgeschlagen, die Federbeilage auf die Feder unmittelbar aufzuvulkanisieren. Damit wird zwar die Spaltbildung zwischen der Federwindung der Feder und der Federbeilage vermieden, der Prozess des Aufvulkanisierens eines Elastomers auf die Feder ist jedoch sehr aufwendig und schränkt die mögliche Materialwahl der Federbeilage stark ein. Hierzu wird insbesondere vorgeschlagen, dass eine Federbeilage zur Montage an die Feder bereit gestellt werden soll, die sich in einem nicht vollständig ausvulkanisierten Montagezustand befindet. Erst in einem Endzustand, wenn die Federbeilage an die Feder anvulkanisiert werden soll, soll das Material der Federbeilage endgültig ausvulkanisiert werden. Ferner ist erforderlich, auf die Federwindung, auf die die Federbeilage aufvulkanisiert werden soll, eine Grundierungsschicht aufzubringen, wodurch der Aufwand zum Aufvulkanisieren der Federbeilage auf die Federwindung der Feder weiter erhöht wird.

Das Dokument EP0791491A1 offenbart eine Lageranordnung gemäß dem Oberbegriff des Anspruchs 1. Die Dokumente DE 10 2007 003 782 A1, US 7213802 B2 und US 3141660 offenbaren andere Lageranordnungen für eine Feder.

Es ist daher die Aufgabe der vorliegenden Erfindung, eine Lageranordnung für eine Feder zu schaffen, die die Nachteile des vorstehend bezeichneten Standes der Technik überwindet und eine einfache Anordnung einer Federbeilage an die Feder ermöglicht.

Diese Aufgabe wird ausgehend von einer Lageranordnung für eine Feder gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass zwischen der Feder und der Federbeilage ein Klebstoff eingebracht ist, sodass die Verbindung der Federbeilage mit der Feder eine Klebeverbindung aufweist.

Der Gedanke der erfindungsgemäßen Bildung einer Lageranordnung besteht darin, eine stoffschlüssige Verbindung zwischen der Feder und der Federbeilage zu schaffen, die einfach ausgeführt und ohne zusätzlichen notwendigen Zeitaufwand in einen Montagevorgang der Lageranordnung integriert werden kann. Durch das einfache Aufbringen eines Klebstoffes auf die Feder und/oder auf die Federbeilage ergibt sich ein äußerst einfacher Prozess zur Herstellung einer stoffschlüssigen Fügeverbindung zwischen der Feder und der Federbeilage, ohne dass die Notwendigkeit entsteht, für die Herstellung der stoffschlüssigen Verbindung das Material der Federbeilage speziell auswählen zu müssen und ohne dass aufwendige Fertigungszwischenschritte erforderlich sind. Vorzugsweise kann der Klebstoff auf die Federbeilage aufgebracht werden, bevor die Feder mit der Federbeilage gefügt wird. Alternativ oder zusätzlich kann der Klebstoff auch auf die Feder aufgebracht werden. Gemäß der Erfindung ist der Klebstoff als ein bei Raumtemperatur aushärtbarer Klebstoff ausgebildet. Damit entsteht der weitere Vorteil, dass die Klebeverbindung zwischen der Feder und der Federbeilage keinem weiteren Prozessschritt zugeführt werden muss, um die Klebeverbindung fertigzustellen. Sobald der Klebstoff zwischen der Feder und der Federbeilage eingebracht und die Federbeilage an die Feder gefügt ist, kann der so gebildete Verbund aus Feder und Federbeilage zur Bildungeines Federsystems weiter verarbeitet werden, beispielsweise um ein Federbein eines Fahrzeugfahrwerkes fertigzustellen. Das Aushärten des Klebstoffes bei Raumtemperatur kann in oder während eines nachfolgenden Montageprozesses oder nach Fertigstellung des Federsystems für das Fahrzeugfahrwerk erfolgen.

Die Feder kann ein erstes, vorzugsweise einer Fahrzeugachse zugewandtes unteres Ende und ein zweites, vorzugsweise einem Federdom zugewandtes oberes Ende aufweist, wobei die Anordnung einer Federbeilage wenigstens am ersten und/oder am zweiten Ende der Feder vorgesehen ist. Die Anordnung der Federbeilage an der Feder mit der Klebeverbindung kann vorzugsweise am ersten, in Richtung zur Fahrzeugachse weisenden unteren Ende der Feder erfolgen, da an diesem Ende die Einwirkung von Verunreinigungen auf die Lageranordnung am größten ist. Insbesondere kann die Lageranordnung mit einem Federteller besonders zur Aufnahme von sand- und staubartigen Verunreinigungen sein, die eine abrasive Wirkung auf die Feder haben können, wenn diese nicht stoffschlüssig mit der Federbeilage verbunden ist. Die vorstehend genannten Vorteile der Klebeverbindung zwischen der Federbeilage und der Feder können jedoch auch für das zweite, vorzugsweise in Richtung zum Federdom weisende obere Ende der Feder genutzt werden. Gemäß der Erfindung umfasst die Federbeilage ein Elastomer und ist flexibel ausgebildet, wobei die Federbeilage mit einer Bewegung in der Federwindung mitbewegbar ausgebildet ist. Damit kann die Federbeilage aus einem formfesten, jedoch elastisch verformbaren Kunststoff bestehen, und die Federkennlinie der Feder ist durch den Verbund der Federbeilage mit der endseitigen Federwindung nicht beeinflusst. Durch das Mitbewegen der Federbeilage mit der Federwindung findet die Abwälzbewegung der Feder nicht mehr in der Kontaktstelle zur Federbeilage oder gar zum Federteller statt, und die Abwälzbewegung findet vorzugsweise zwischen der Federbeilage und dem Federteller statt.

Die Federbeilage kann ringartig ausgebildet sein und sich über einen Winkel von wenigstens 180°, vorzugsweise von wenigstens 270° und insbesondere von bis zu 360° oder mehr erstrecken. Beträgt der Winkel weniger als 360°, so ist die Federbeilage nach Art eines geöffneten Ringes ausgeführt, und weist bei einem Winkel von 180° beispielsweise die Form eines Halbmondes auf. Beträgt der Winkel, mit dem sich die Federbeilage um eine Mittelachse herum erstreckt, beispielsweise 360°, so kann diese als geschlitzter Ring ausgeführt sein. Dabei ruht ein erster Endbereich der Federbeilage auf dem Federteller, und ein zweiter Endbereich der Federbeilage ist mit der Federwindung der Feder mitbewegt.

Vorteilhafterweise weist die Federbeilage etwa einen rechteckförmigen Grundquerschnitt auf, der insbesondere über dem ringförmigen Umfang gleichbleibend ausgeführt ist. Der rechteckförmige Grundquerschnitt kann durch eine umlaufende Vertiefung weitergebildet sein, in die die Federwindung einklebbar ist, wobei die Vertiefung insbesondere einen halbkreisförmigen Querschnitt aufweist. In den halbkreisförmigen Querschnitt kann die Federwindung eingeklebt werden, sodass sich um die zumindest halbe Federwindung der rechteckförmige Grundquerschnitt der Federbeilage erstreckt.

Weiterhin kann die Lageranordnung wenigstens einen Federteller aufweisen, in dem vorzugsweise das erste Ende der Feder aufgenommen ist, wobei die Federbeilage insbesondere zwischen der endseitigen Federwindung und einer Auflagefläche des Federtellers angeordnet ist. Durch den rechteckförmigen Grundquerschnitt der Federbeilage kann diese eine Grundfläche aufweisen, mit der die Federbeilage über der Auflagefläche des Federtellers abwälzt, wenn die Feder komprimiert wird. Alternativ kann der Grundquerschnitt der Federbeilage über dem ringförmigen Umfang auch veränderlich ausgeführt sein, und beispielsweise kann die Federbeilage eine über dem gesamten Umfang plane Grundfläche aufweisen, mit der die Federbeilage auf dem Federteller aufliegt. Die Oberseite kann beispielsweise eine umlaufende Vertiefung mit einer Steigung besitzen, die der Steigung der Federwindung entspricht. Bei einer Einfederung der Feder und folglich bei einer Bewegung der Federwindung über den Federteller kann eine Kompression der Federbeilage stattfinden, sodass weder zwischen der Federwindung und der Federbeilage noch zwischen der Federbeilage und dem Federteller eine Relativbewegung, insbesondere eine Wälzbewegung stattfinden würde.

Die Lageranordnung ist Bestandteil eines Federsystems eines Federbeins eines Fahrzeugfahrwerkes, in dem die Schraubendruckfeder ausgeführt ist. Insbesondere kann durch die Schraubendruckfeder ein Stoßdämpfer hindurchgeführt sein, der konzentrisch oder exzentrisch zur Rotationsachse der Schraubendruckfeder angeordnet ist. Insbesondere kann der Federteller mit dem Stoßdämpfer in Verbindung gebracht sein, und die Schraubendruckfeder kann sich mit der unteren Endseite gegen den Federteller und mit der oberen Seite gegen eine entsprechende Montageanordnung abstützen. Gemäß der Erfindung ist in die Feder eine Druckvorspannung eingebracht, wobei der Klebstoff unter Einwirkung der Druckvorspannung aushärtbar ist. Dadurch wird ein besonderer Vorteil erreicht, da durch das Aushärten des Klebstoffes zwischen der Feder und der Federbeilage kein eigenständiger Prozessschritt zur Aushärtung des Klebstoffes erforderlich ist, und der Verbund aus Feder und Federbeilage kann auch dann weiter verarbeitet werden, wenn der Klebstoff bereits in die Fügeverbindung eingebracht ist, dieser jedoch noch nicht ausgehärtet ist. Besonders vorteilhaft erfolgt die Aushärtung jedoch unter der Druckvorspannung der Feder im Federsystem, wodurch zur Herstellung einer belastbaren Klebeverbindung eine Pressung zwischen den Fügeteilen auf einfache Weise aufgebracht ist. Alternativ kann der Verbund aus Feder und Federsystem auch ohne Druckvorspannung aushärten, beispielsweise in einer entsprechenden Vorrichtung.

Die Aufgabe der vorliegenden Erfindung wird ferner gelöst durch ein Verfahren gemäß Anspruch 7. Mit dem erfindungsgemäßen Verfahren kann eine Lageranordnung für eine Feder, insbesondere für eine Feder eines Fahrzeugfahrwerkes geschaffen werden, wobei zwischen der Feder und der Federbeilage ein Klebstoff eingebracht ist, sodass die Verbindung der Federbeilage mit der Feder eine Klebeverbindung aufweist. Der besondere Vorteil des erfindungsgemäßen Verfahrens wird damit erreicht, dass das Aushärten des Klebstoffes unter der aufgebrachten Federvorspannung erfolgen kann, wobei das Aushärten des Klebstoffes keinen separaten Fertigungsschritt erfordert.

Insbesondere kann vor dem Anordnen des Klebstoffes auf die Federbeilage die mit dem Klebstoff in Kontakt zu bringende Oberfläche der Federbeilage aktiviert werden. Vorzugsweise kann die Oberfläche in der umlaufenden Vertiefung der Federbeilage aktiviert werden, in die die Federwindung der Feder eingeklebt wird. Alternativ oder zusätzlich kann auch die Oberfläche der Federwindung aktiviert werden, um eine bessere Haftung des Klebstoffes auf der Oberfläche der Federwindung zu erzielen. Vorzugsweise kann die Aktivierung bei Raumtemperatur erfolgen, sodass keine Mittel vorgesehen werden müssen, um die Klebeverbindung nach ihrer Herstellung zu heizen.

Die Feder der Lageranordnung ist als Schraubendruckfeder ausgeführt und zur Bildung eines Federbeins eines Fahrzeugfahrwerkes mit einer Druckvorspannung axial vorgespannt, wobei der Klebstoff unter Einwirkung der Druckvorspannung ausgehärtet wird.

### BEVORZUGTES AUSFÜHRUNGSBEISPIEL DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: ein Ausführungsbeispiel einer Lageranordnung für eine Feder in einer perspektivischen Ansicht vor dem Fügen der Federbeilage an der Feder,
- Figur 2: eine Ansicht einer Feder mit einer an der Feder gefügten Federbeilage mit einer Fügeverbindung gemäß der vorliegenden Erfindung,
- Figur 3: eine perspektivische Ansicht einer Federbeilage zur Bildung einer Lageranordnung für eine Feder und
- Figur 4: eine Ansicht des Grundquerschnittes einer Federbeilage gemäß Figur 3.

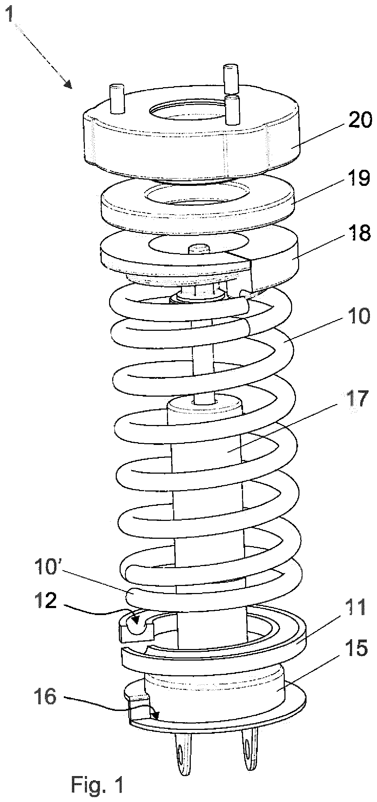

In Figur 1 ist eine Lageranordnung 1 einer Feder 10 gezeigt. Die Feder 10 bildet gemeinsam mit einem Stoßdämpfer 17, der durch die Feder 10 hindurchgeführt ist, die Feder- Dämpfer-Einheit eines Federbeins für ein Fahrzeugfahrwerk. Die Feder 10 weist ein erstes, in Richtung einer Fahrzeugachse weisendes unteres Ende und ein zweites, in Richtung eines Federdoms weisendes oberes Ende auf, wobei die Anordnung einer Federbeilage 11 beispielhaft am ersten, unteren Ende der Feder 10 gezeigt ist. Die Federbeilage 11 ist in einem nicht montierten Zustand gezeigt, und kann zur Montage an einen Teil einer Federwindung 10' der Feder 10 an diese angeklebt werden. Die Federbeilage 11 erstreckt sich um die Mittelachse der Feder 10 mit einem Winkel von etwa 360°, sodass die Federbeilage 11 als geschlitzter Ring ausgeführt ist.

Die Feder 10 stützt sich mit der Federbeilage 11 gegen einen Federteller 15 ab, und der Federteller 15 besitzt eine Auflagefläche 16, auf der die Federbeilage 11 anliegen kann. Wird die Feder 10 im Verbund des Federbeins mit einer Druckkraft verspannt, so stützt sich die Feder 10 mit der Federbeilage 11 gegen die Auflagefläche 16 des Federtellers 15 ab. Der Federteller 15 ist dabei an der unteren Seite des Stoßdämpfers 17 angeordnet.

Um gemäß der vorliegenden Erfindung eine stoffschlüssige Verbindung zwischen der Feder 10 und der Federbeilage 11 mittels eines Klebstoffes 12 zu schaffen, ist dieser beispielhaft auf der Fügeseite der Federbeilage 11 aufgebracht. Wird die Federwindung 10' mit der Federbeilage 11 in Kontakt gebracht, so kann der Klebstoff 12 aushärten, und die Federbeilage 11 weist eine stoffschlüssige Verbindung zur Federwindung 10' der Feder 10 auf.

Am zweiten, oberen Ende der Feder 10, das in Richtung eines Federdoms weist, ist die Feder 10 gegen einen weiteren Federteller 18 abgestützt. Der Federteller 18 kann mit einem elastischen Element 19, das beispielsweise als Gummipuffer ausgeführt sein kann, und einer oberen Montageanordnung 20 eine Paketanordnung bilden, um im Federdom eines Fahrzeugs eingebaut zu werden. Die obere Montageanordnung 20 kann ein Domlager umfassen, um eine Drehbarkeit des Federbeins mit der Feder 10 und dem Stoßdämpfer 17 zu ermöglichen. Die gezeigte Anordnung wird gewöhnlich für eine Vorderachse eines Kraftfahrzeugs verwendet, wobei die erfindungsgemäße Lageranordnung 1 mit einer Klebeverbindung zwischen der Feder 10 und der Federbeilage 11 auch für eine Lagerung einer Feder 10 für die Hinterachse eines Kraftfahrzeugs Verwendung finden kann.

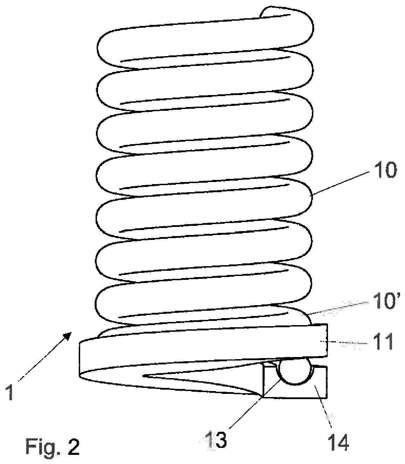

In Figur 2 ist die Lageranordnung 1 mit einer Verbindung zwischen einer Feder 10 und einer Federbeilage 11 gemäß der vorliegenden Erfindung näher dargestellt. Die Federbeilage 11 ist in einer an die Federwindung 10' gefügten Anordnung gezeigt. Die Federbeilage 11 erstreckt sich mit einem Winkel von 360° um die Mittelachse der Feder 10, und bildet einen geschlitzten Ring. Aufgrund der stoffschlüssigen Verbindung zwischen der Federbeilage 11 und der Federwindung 10' weist die Federbeilage 11 eine Steigung auf, die der Steigung der Federwindung 10' entspricht. Im Betrieb der Feder 10 kann die Federbeilage 11 mit der Federwindung 10' mitbewegt werden, und eine Abwälzbewegung kann zwischen der Federbeilage 11 und dem Federteller 15 (siehe hierzu Figur 1) stattfinden, wohingegen zwischen der Federwindung 10' und der Federbeilage 11 keine Relativbewegung stattfindet.

Der Querschnitt der Federbeilage 11 weist einen Grundquerschnitt 14 auf, der über dem ringförmigen Umfang der Federbeilage 11 unveränderlich und gleichbleibend ausgeführt ist. Der rechteckförmige Grundquerschnitt 14 ist durch eine umlaufende Vertiefung 13 weitergebildet, in die die Federwindung 10' eingeklebt ist. Die Vertiefung 13 ist als Vertiefung mit einem halbkreisförmigen Querschnitt gezeigt, sodass die Federwindung 10' etwas hälftig in der Vertiefung 13 der Federbeilage 11 aufgenommen ist.

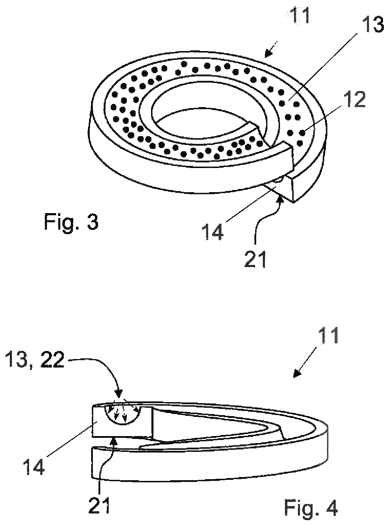

Figur 3 zeigt in einer perspektivischen Ansicht die Federbeilage 11, die sich mit einem Winkel von etwa 300° um eine - nicht näher dargestellte- Mittelachse der Feder 10 erstreckt. Die Federbeilage 11 besitzt einen Grundquerschnitt 14, der auf der oberen, in Richtung zur Feder 10 weisenden Seite eine umlaufende Vertiefung 13 aufweist. Auf der gegenüberliegenden, nach unten weisenden Seite besitzt die Federbeilage 11 eine Grundfläche 21, die etwa plan ausgeführt ist und als Abstützfläche gegen die Auflagerfläche 16 des Federtellers 15 dient, siehe hierzu Figur 1.

In die umlaufende Vertiefung 13 ist beispielhaft ein Klebstoff 12 eingebracht, der als ein bei Raumtemperatur aushärtender Klebstoff 12 ausgeführt ist. Wird die Federbeilage 11 mit dem eingebrachten Klebstoff 12 mit der Federwindung 10' der Feder 10 in Kontakt gebracht, so kann die stoffschlüssige Verbindung zwischen der Feder 10 und der Federbeilage 11 gemäß der vorliegenden Erfindung hergestellt werden.

Figur 4 zeigt eine weitere Darstellung der Federbeilage 11 mit dem Grundquerschnitt 14, mit der oberseitig eingebrachten umlaufenden Vertiefung 13 und der auf der Unterseite vorhandenen Grundfläche 21. Die Oberfläche der Federbeilage 11 in der umlaufenden Vertiefung 13 kann einen Aktivierungsbereich 22 bilden, welcher durch mehrere Pfeile angedeutet ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

### Bezugszeichenliste

- 1: Lageranordnung

- 10: Feder
- 10': Federwindung
- 11: Federbeilage
- 12: Klebstoff
- 13: umlaufende Vertiefung
- 14: Grundquerschnitt
- 15: Federteller
- 16: Auflagefläche
- 17: Stoßdämpfer
- 18: Federteller
- 19: elastisches Element
- 20: obere Montageanordnung
- 21: Grundfläche
- 22: Aktivierungsbereich

## Patentansprüche

1. Lageranordnung (1) für eine Feder (10) eines Fahrzeugfahrwerkes, mit zumindest einer Federbeilage (11), in der wenigstens ein Teil einer Federwindung (10') der Feder (10) aufgenommen ist, wobei die Lageranordnung (1) Bestandteil eines Federbeines eines Fahrzeugfahrwerkes ist, in dem die Feder (10) als Schraubendruckfeder ausgeführt ist und durch die ein Stoßdämpfer (17) hindurchgeführt ist, und wobei die Federbeilage (11) ein Elastomer umfasst und flexibel ausgebildet ist, wobei die Federbeilage (11) mit einer Bewegung in der Federwindung (10') mitbewegbar ausgebildet ist, wobei zwischen der Feder (10) und der Federbeilage (11) ein Klebstoff (12) eingebracht ist, sodass die Verbindung der Federbeilage (11) mit der Feder (10) eine Klebeverbindung aufweist, **dadurch gekennzeichnet, dass** der Klebstoff (12) als ein bei Raumtemperatur aushärtbarer Klebstoff (12) ausgebildet ist und dass die Feder (10) im Federsystem eine Druckvorspannung aufweist, wobei der Klebstoff (12) unter Einwirkung der Druckvorspannung aushärtbar ist.

2. Lageranordnung (1) nach Anspruch 1, **dadurch gekennzeichnet, dass** die Feder (10) ein erstes, vorzugsweise einer Fahrzeugachse zugewandtes unteres Ende und ein zweites, vorzugsweise einem Federdom zugewandtes oberes Ende aufweist, wobei die Anordnung einer Federbeilage (11) wenigstens am ersten und/oder am zweiten Ende der Feder (10) vorgesehen ist.

3. Lageranordnung (1) nach Anspruch 1 oder 2, **dadurch gekennzeichnet, dass** die Federbeilage (11) ringartig ausgebildet ist und sich über einen Winkel von wenigstens 180°, vorzugsweise von wenigstens 270° und insbesondere von 360° erstreckt.

4. Lageranordnung (1) nach einem der Ansprüche 1 bis 3, **dadurch gekennzeichnet, dass** die Federbeilage (11) einen vorzugsweise etwa rechteckförmigen Grundquerschnitt (14) aufweist, der insbesondere über dem ringförmigen Umfang gleichbleibend ausgeführt ist.

5. Lageranordnung (1) nach Anspruch 4, **dadurch gekennzeichnet, dass** der Grundquerschnitt (14) eine umlaufende Vertiefung (13) aufweist, in die die Federwindung (10') einklebbar ist, wobei die Vertiefung (13) insbesondere einen halbkreisförmigen Querschnitt aufweist.

6. Lageranordnung (1) nach einem der vorgenannten Ansprüche, **dadurch gekennzeichnet, dass** wenigstens ein Federteller (15) vorgesehen und in dem vorzugsweise das erste Ende der Feder (10) aufgenommen ist, wobei die Federbeilage (11) insbesondere zwischen der endseitigen Federwindung (10') und einer Auflagefläche (16) des Federtellers (15) angeordnet ist.

7. Verfahren zur Bildung einer Lageranordnung (1) nach einem der Ansprüche 1 bis 6 für eine Feder (10) eines Fahrzeugfahrwerkes, mit zumindest einer Federbeilage (11), in der wenigstens ein Teil einer Federwindung (10') der Feder (10) aufgenommen ist, wobei die Federbeilage (11) ein Elastomer umfasst und flexibel ausgebildet ist, sodass die Federbeilage (11) mit einer Bewegung in der Federwindung (10') mitbewegbar ist und wobei das Verfahren wenigstens die folgenden Schritte aufweist:
- Anordnen eines Klebstoffes (12) zwischen der Feder (10) und der Federbeilage (11),
- Fügen der Federbeilage (11) an die Feder (10),
- Einbringen einer Federvorspannung in die Feder (10) und
- Aushärten des Klebstoffes (12) unter der Federvorspannung.

8. Verfahren nach Anspruch 7, **dadurch gekennzeichnet, dass** vor dem Anordnen des Klebstoffes (12) auf die Federbeilage (11) die mit dem Klebstoff (12) in Kontakt zu bringende Oberfläche der Federbeilage (11) aktiviert wird.

9. Verfahren nach Anspruch 7 oder 8, **dadurch gekennzeichnet, dass** die Feder (10) der Lageranordnung (1) als Schraubendruckfeder ausgeführt ist und zur Bildung eines Federbeins eines Fahrzeugfahrwerkes mit einer Druckvorspannung axial vorgespannt wird, wobei der Klebstoff (12) unter Einwirkung der Druckvorspannung ausgehärtet wird.

## Claims

1. Bearing arrangement (1) for a spring (10) of a vehicle chassis, with at least one spring insert (11) in which at least one part of a spring coil (10') of the spring (10) is accommodated, wherein the bearing arrangement (1) is a component of a spring strut of a vehicle chassis, in which the spring (10) is designed as a helical compression spring and through which a shock absorber (17) is guided through, and wherein the spring insert (11) comprises an elastomer and is of flexible design, wherein the spring insert (11) is designed so as to be able to move together with a movement in the spring coil (10'), wherein an adhesive (12) is introduced between the spring (10) and the spring insert (11), and therefore the connection of the spring insert (11) to the spring (10) has an adhesive connection, **characterized in that** the adhesive (12) is designed as an adhesive (12) which is hardenable at room temperature, and **in that** the spring (10) in the spring system has a compressive prestress, wherein the adhesive (12) can be hardened under the action of the compressive prestress.

2. Bearing arrangement (1) according to Claim 1, **characterized in that** the spring (10) has a first lower end preferably facing a vehicle axle, and a second upper end preferably facing a spring dome, wherein the arrangement of a spring insert (11) at least at the first and/or at the second end of the spring (10) is provided.

3. Bearing arrangement (1) according to Claim 1 or 2, **characterized in that** the spring insert (11) is designed in the manner of a ring and extends over an angle of at least 180°, preferably of at least 270° and in particular of 360°.

4. Bearing arrangement (1) according to one of Claims 1 to 3, **characterized in that** the spring insert (11) has a preferably approximately rectangular basic cross section (14) which is in particular formed consistently over the annular circumference.

5. Bearing arrangement (1) according to Claim 4, **characterized in that** the basic cross section (14) has an encircling depression (13) into which the spring coil (10') can be adhesively bonded, wherein the depression (13) in particular has a semicircular cross section.

6. Bearing arrangement (1) according to one of the preceding claims, **characterized in that** at least one spring disc (15) is provided and in which preferably the first end of the spring (10) is accommodated, wherein the spring insert (11) is in particular arranged between the end-side spring coil (10') and a supporting surface (16) of the spring disc (15).

7. Method for forming a bearing arrangement (1) according to one of Claims 1 to 6 for a spring (10) of a vehicle chassis, with at least one spring insert (11) in which at least one part of a spring coil (10') of the spring (10) is accommodated, wherein the spring insert (11) comprises an elastomer and is of flexible design such that the spring insert (11) is able to move together with a movement in the spring coil (10'), and wherein the method has at least the following steps:
- arranging an adhesive (12) between the spring
(10) and the spring insert (11),
- joining the spring insert (11) to the spring (10),
- introducing a spring prestress into the spring
(10), and
- hardening the adhesive (12) under the spring
prestress.

8. Method according to Claim 7, **characterized in that**, before the adhesive (12) is arranged on the spring insert (11), that surface of the spring insert (11) which is to be brought into contact with the adhesive (12) is activated.

9. Method according to Claim 7 or 8, **characterized in that** the spring (10) of the bearing arrangement (1) is designed as a helical compression spring and is prestressed axially with a compressive prestress in order to form a spring strut of a vehicle chassis, wherein the adhesive (12) is hardened under the action of the compressive prestress.

## Revendications

1. Système de palier (1) pour un ressort (10) d'un train de roulement de véhicule, avec au moins une rondelle de calage de ressort (11), dans laquelle au moins une partie d'une spire de ressort (10') du ressort (10) est logée, dans lequel le système de palier (1) fait partie d'une jambe de force à ressort d'un train de roulement de véhicule, dans laquelle le ressort (10) est formé par un ressort de compression hélicoïdal et à travers lequel un amortisseur (17) est installé, et dans lequel la rondelle de calage de ressort (11) comprend un élastomère et est flexible, dans lequel la rondelle de calage de ressort (11) peut être entraînée avec un mouvement dans la spire de ressort (10'), dans lequel une colle (12) est introduite entre le ressort (10) et la rondelle de calage de ressort (11), de telle manière que la liaison de la rondelle de calage de ressort (11) avec le ressort (10) présente une liaison collée, **caractérisé en ce que** la colle (12) est une colle (12) qui peut durcir à la température ambiante et **en ce que** le ressort (10) présente dans le système de ressort une précontrainte de compression, dans lequel la colle (12) peut être durcie sous l'action de la précontrainte de compression.

2. Système de palier (1) selon la revendication 1, **caractérisé en ce que** le ressort (10) présente une première extrémité inférieure, de préférence tournée vers un essieu du véhicule, et une deuxième extrémité supérieure, de préférence tournée vers un dôme de ressort, dans lequel l'agencement d'une rondelle de calage de ressort (11) est prévu au moins à la première et/ou à la deuxième extrémité du ressort (10).

3. Système de palier (1) selon la revendication 1 ou 2, **caractérisé en ce que** la rondelle de calage de ressort (11) est réalisée en forme d'anneau et s'étend sur un angle d'au moins 180°, de préférence d'au moins 270° et en particulier de 360°.

4. Système de palier (1) selon l'une quelconque des revendications 1 à 3, **caractérisé en ce que** la rondelle de calage de ressort (11) présente une section transversale de base (14) de préférence sensiblement rectangulaire, qui est constante en particulier sur le pourtour annulaire.

5. Système de palier (1) selon la revendication 4, **caractérisé en ce que** la section transversale de base (14) présente un creux périphérique (13), dans lequel la spire de ressort (10') peut être collée, et dans lequel le creux (13) présente en particulier une section transversale semi-circulaire.

6. Système de palier (1) selon l'une quelconque des revendications précédentes, **caractérisé en ce qu'**il est prévu au moins une coupelle de ressort (15) dans laquelle de préférence la première extrémité du ressort (10) est logée, dans lequel la rondelle de calage de ressort (11) est disposée en particulier entre la spire d'extrémité de ressort (10') et une face d'appui (16) de la coupelle de ressort (15).

7. Procédé pour former un système de palier (1) selon l'une quelconque des revendications 1 à 6 pour un ressort (10) d'un train de roulement de véhicule, avec au moins une rondelle de calage de ressort (11), dans laquelle au moins une partie d'une spire de ressort (10') du ressort (10) est logée, dans lequel la rondelle de calage de ressort (11) comprend un élastomère et est flexible, de telle manière que la rondelle de calage de ressort (11) puisse être entraînée avec un mouvement dans la spire de ressort (10') et dans lequel le procédé comprend au moins les étapes suivantes:
- disposer une colle (12) entre le ressort (10) et la rondelle de calage de ressort (11),
- joindre la rondelle de calage de ressort (11) au ressort (10),
- introduire une précontrainte de ressort dans le ressort (10), et
- durcir la colle (12) sous la précontrainte du ressort.

8. Procédé selon la revendication 7, **caractérisé en ce qu'**avant la mise en place de la colle (12) sur la rondelle de calage de ressort (11), on active la surface de la rondelle de calage de ressort (11) à mettre en contact avec la colle (12).

9. Procédé selon la revendication 7 ou 8, **caractérisé en ce que** l'on réalise le ressort (10) du système de palier (1) sous la forme d'un ressort de compression hélicoïdal et on le précontraint axialement avec une précontrainte de compression pour former une jambe de force à ressort d'un train de roulement de véhicule, dans lequel on fait durcir la colle (12) sous l'action de la précontrainte de compression.
